**Europäisches Patentamt**

**European Patent Office**

**Office européen des brevets**

(11) Veröffentlichungsnummer : **0 327 876 B1**

(12) # EUROPÄISCHE PATENTSCHRIFT

(45) Veröffentlichungstag der Patentschrift :
**15.04.92 Patentblatt 92/16**

(51) Int. Cl.$^5$ : **A46B 13/02**

(21) Anmeldenummer : **89101173.6**

(22) Anmeldetag : **24.01.89**

(54) **Elektrische Zahnbürste.**

(30) Priorität : **06.02.88 DE 3803646**

(43) Veröffentlichungstag der Anmeldung :
**16.08.89 Patentblatt 89/33**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**US-A- 3 379 906**
**US-A- 3 489 936**
**US-A- 4 710 995**

(73) Patentinhaber : **Gimelli Produktions AG**
**Eichenweg 2**
**CH-3052 Zollikofen (CH)**

(72) Erfinder : **Hommann, Edgar**
**Reuenberg**
**CH-3257 Grossaffoltern (CH)**

(74) Vertreter : **Schlagwein, Udo, Dipl.-Ing.**
**Patentanwalt Frankfurter Strasse 34**
**W-6350 Bad Nauheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 327 876 B1

## Beschreibung

Die Erfindung bezieht sich auf eine elektrische Zahnbürste mit einer im Zahnbürstengehäuse drehbar gelagerten Zahnbürstenachse welche von einem Elektromotor mit einer umlaufenden Motorwelle in eine Pendelbewegung um ihre Längsachse und eine hin- und hergehende Bewegung in Richtung ihrer Längsachse bewegbar ist, wobei zur Erzeugung der Pendelbewegung eine Schwinge fest mit der Zahnbürstenachse verbundenen ist, in die ein Exzenterzapfen eingreift. Eine solche Zahnbürste ist Gegenstand der US-A-4,710,995.

Bei der bekannten Zahnbürste sind zur Erzeugung der beiden Bewegungen der Zahnbürstenachse insgesamt zwei jeweils einen Exzenter aufweisende Getriebe vorgesehen. Das Getriebe zur Erzeugung der pendelnden Bewegung weist eine Schwinge auf, in die ein achsparallel zur Zahnbürstenachse ausgerichteter Exzenterzapfen greift. Auch das zweite Getriebe ist als Exzentertrieb ausgebildet. Die Zahnbürste kann so umgeschaltet werden, daß die Zahnbürstenachse entweder die pendelnde oder die hin- und hergehende Bewegung ausführt. Sie ist durch die Anordnung von zwei Getrieben relativ aufwendig und deshalb teuer.

Der Erfindung liegt die Aufgabe zugrunde, eine Zahnbürste der eingangs genannten Art derart zu gestalten, daß mit einem möglichst einfachen Getriebe die Drehbewegung ihres Motors in eine pendelnde und gleichzeitig hin- und hergehende Bewegung der Zahnbürstenachse umgewandelt werden kann.

Diese Aufgabe wird erfindungsgemäß dadurch gelöst, daß die Schwinge achsparallel zur Zahnbürstenachse und der Exzenterzapfen senkrecht zur Zahnbürstenachse ausgerichtet ist und in eine quer zur Zahnbürstenachse gerichtete Aufnahme der Schwinge greift.

Durch diese Gestaltung vermag der Exzenter die Schwinge mit der Zahnbürstenachse in Richtung der Zahnbürstenachse hin und her zu schieben, so daß die gewünschte axiale Verschiebung der Zahnbürstenachse eintritt. Gleichzeitig bewirkt der Exzenter ein Kippen der Schwinge zur einen oder anderen Seite, wenn er sich auf seiner Kreisbahn zu den Seiten hin bewegt. Das Kippen der Schwinge führt zu einer entsprechenden Pendelbewegung der Zahnbürstenachse. Auf diese Weise werden mittels eines einfachen Kurbeltriebs die zwei gewünschten, sich überlagernden Bewegungen der Zahnbürstenachse erreicht. Dank der Erfindung wird somit eine sehr einfache und deshalb kostengünstig herstellbare Zahnbürste geschaffen, deren Borstenträger eine kreisförmige Bewegung ausführt, was für eine gründliche Reinigung der Zähne vorteilhaft ist.

Besonders vorteilhaft ist es, wenn auf dem Exzenterzapfen verdrehbar ein Gleitstein angeordnet ist, welcher in die Aufnahme eingreift, und wenn die beiden achsparallel zur Zahnbürstenachse verlaufenden Seitenflächen des Gleitsteines und/oder die entsprechenden Seitenflächen der Aufnahme zur Ermöglichung einer Kippbewegung der Schwinge gekrümmt oder abgeschrägt verlaufen. Eine solche Anordnung arbeitet reibungsarm und ist kostengünstig herstellbar.

Zur Ermöglichung der Kippbewegung der Schwinge kann man entweder die Seitenflächen der Gleitsteines ballig oder aber die gegen ihn anliegenden Seitenflächen der Aufnahme der Schwinge konkav ausbilden. Möglich ist es natürlich auch, jeweils beide sich berührenden Flächen gekrümmt auszubilden.

Konstruktiv besonders einfach ist die Zahnbürste gestaltet, wenn gemäß einer vorteilhaften Ausgestaltung der Erfindung der Exzenterzapfen an der Stirnseite eines um eine quer zur Zahnbürstenachse drehbar im Zahnbürstengehäuse gelagerten Zahnrades vorgesehen ist, in welches ein auf der Motorwelle sitzendes Ritzel eingreift. Das Zahnrad könnte zum Beispiel ein Kegelrad oder ein Kronenrad sein. Wichtig ist lediglich, daß sich der Motorwelle ein Winkeltrieb anschließt, so daß die Drehachse des Exzenterzapfens quer zur Motorwelle und damit auch quer zur Zahnbürstenachse verläuft.

Die Kippbewegung der Schwinge ergibt sich besonders einfach, wenn gemäß einer anderen Ausgestaltung der Erfindung der die Aufnahme für den Gleitstein aufweisende Teil der Schwinge radialen Abstand von der Zahnbürstenachse hat. Bei dieser Ausgestaltung greift der Gleitstein mit beträchtlichem Abstand von der Schwenkachse des Kipphebels, die zugleich die Zahnbürstenachse ist, am Kipphebel an. Dadurch entsteht ein relativ großes Kippmoment, so daß die pendelnde Bewegung des Borstenträgers mit ausreichend großer Kraft erfolgt.

Sehr platzsparend ist eine Ausführungsform, gemäß der der Exzenterzapfen von der Seite der Zahnbürstenachse her in den Gleitstein greift.

Bei zahnärztlichen Handstücken verläuft das Werkzeug üblicherweise abgeknickt zum Griffteil. Auch bei einer elektrischen Zahnbürste kann man eine solche abgeknickte Ausrichtung des Borstenträgers erreichen, wenn gemäß einer Weiterbildung der Erfindung das Zahnrad in einem die Zahnbürstenachse lagernden Zahnbürstenkopf angeordnet ist, welcher mit einem Kugelkopf verdrehbar und schwenkbar in einer Kugelpfanne eines den Motor aufnehmenden Griffteiles des Zahnbürstengehäuses sitzt, wobei das Zentrum des Kugelkopfes im Schnittpunkt der Achse des Zahnrades und der Achse der Motorwelle liegt.

Das Zahnrad erlaubt infolge des in ihn eingreifenden Ritzels notwendigerweise nur ein Verkippen des Zahnbürstenkopfes um die Achse des Zahnrades. Um eine Kraftbeaufschlagung des Zahnrades und des Ritzels bei einem Versuch, den Zahnbürstenkopf in anderer Richtung zu kippen, auszuschließen, ist es vorteilhaft,

2

wenn der Zahnbürstenkopf an jeder Seite der das Zahnrad lagernden Achse eine Abstützstelle hat, welche gegen eine stirnseitige Schulter des Griffteiles anliegt. Diese Abstützstellen verhindern ein Verschwenken in andere Richtungen als quer zur Achse des Zahnrades.

Besonders klar ist die mögliche Kipprichtung des Zahnbürstenkopfes festgelegt, wenn gemäß einer anderen Ausgestaltung der Erfindung der Zahnbürstenkopf mit einer über 180 Grad geführten Abstützfläche gegen die stirnseitige Schulter des Griffteiles anliegt und seine Verschwenkbarkeit durch eine sich dieser Abstützfläche anschließende Schrägfläche begrenzt ist.

Eine andere, sehr einfache Möglichkeit der Verhinderung eines Kippens des Zahnbürstenkopfes in eine nicht quer zur Achse des Zahnrades gerichtete Richtung besteht darin, daß die Achse des Zahnrades an zumindest einer Seite aus dem Kugelkopf herausragt und in eine bogenförmige Nut des Griffteiles greift.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in

Fig. 1 eine Ansicht einer erfindungsgemäß gestalteten Zahnbürste,

Fig. 2 einen Längsschnitt durch den Getriebebereich der Zahnbürste nach Figur 1,

Fig. 3 eine Draufsicht auf eine in der Zahnbürste angeordnete Schwinge mit den angrenzenden Bauteilen,

Fig. 4 einen Querschnitt durch die Zahnbürste entlang der Linie IV - IV in Figur 2 unter Weglassung ihres Gehäuses,

Fig. 5 einen gegenüber Figur 2 um 90 Grad verdrehten Längsschnitt durch die Zahnbürste nach Figur 1.

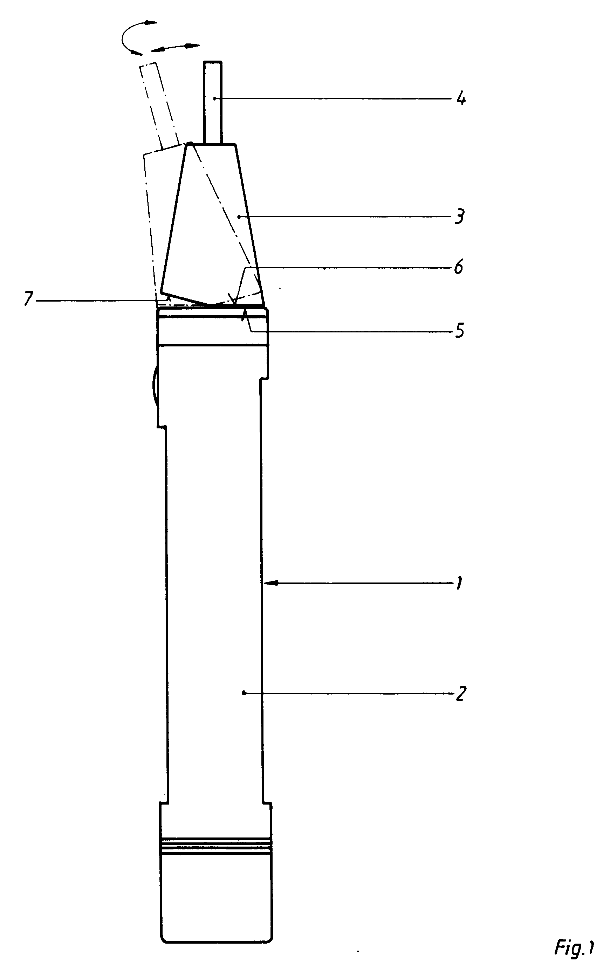

Die in Figur 1 als Ganzes dargestellte Zahnbürste hat ein Gehäuse 1, welches im wesentlichen aus einem Griffteil 2 und einem Zahnbürstenkopf 3 besteht, aus dem eine Zahnbürstenachse 4 herausragt. Auf diesen herausragenden Teil der Zahnbürstenachse 4 wird bei Benutzung der Zahnbürste ein nicht gezeigter Borstenträger gesteckt.

Wie in Figur 1 zu erkennen ist, sitzt der Zahnbürstenkopf 3 mit einer Abstützfläche 5 auf einer stirnseitigen Schulterfläche 6 des Griffteils 2 auf. Der Abstützfläche 5 schließt sich am Zahnbürstenkopf 3 eine Schrägfläche 7 an. Dadurch wird es möglich, den Zahnbürstenkopf 3 aus der in durchgezogenen Linien dargestellten Position in der Zeichnung gesehen so weit nach links bis in die gestrichelt dargestellte Position zu kippen, daß diese Schrägfläche 7 auf der Schulterfläche 6 des Griffteils 2 aufliegt und stattdessen die Abstützfläche 5 schräg von der Schulterfläche 6 weggerichtet ist.

Abgesehen von dieser Kippbarkeit des Zahnbürstenkopfes 3 ist es möglich, ihn mit seiner Zahnbürstenachse 4 um die Längsachse der Zahnbürste zu verdrehen. Beide möglichen Bewegungen sind in Figur 1 durch Pfeile verdeutlicht.

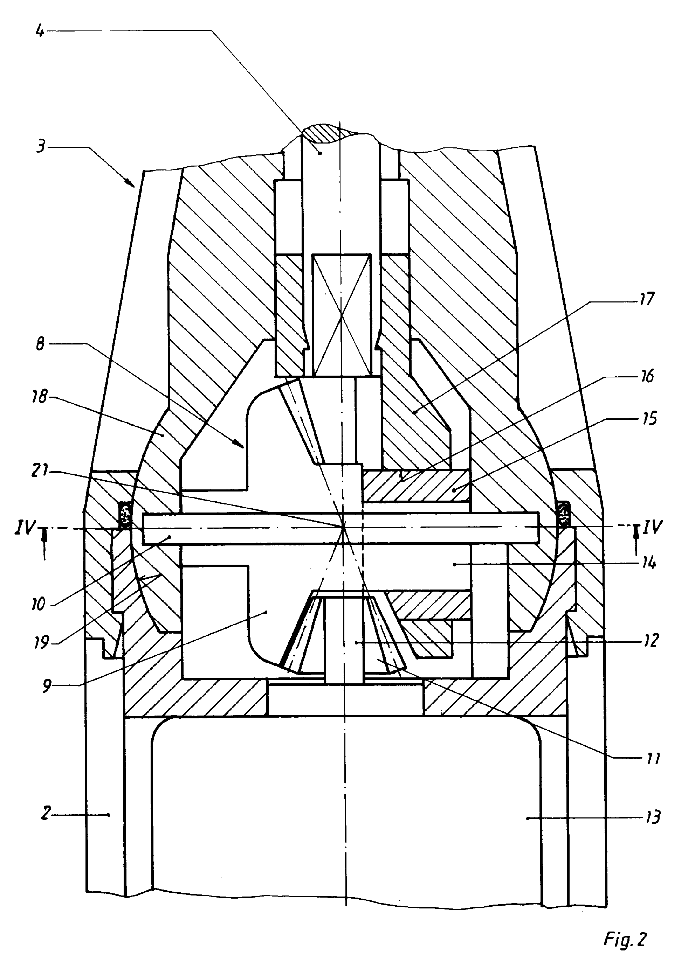

Die Figur 2 verdeutlicht insbesondere die Gestaltung eines Getriebes 8, welches die Bewegung des Zahnbürstenkopfes 3 ermöglicht. Das Getriebe 8 hat ein als Kegelrad ausgebildetes Zahnrad 9, welches mittels einer Achse 10 im Zahnbürstenkopf 3 gelagert ist. Diese Achse 10 verläuft quer zur Zahnbürstenachse 4. Angetrieben wird das Zahnrad 9 von einem koaxial zur Zahnbürstenachse 4 angeordneten, ebenfalls als Kegelrad ausgebildeten Ritzel 11, welches auf einer Motorwelle 12 eines elektrischen Motors 13 sitzt.

Das Zahnrad 9 hat zu einer Stirnseite hin einen Exzenterzapfen 14, der somit ebenfalls quer zur Zahnbürstenachse 4 ausgerichtet ist. Auf diesem Exzenterzapfen 14 ist ein Gleitstein 15 angeordnet, welcher unverdrehbar in einer Aufnahme 16 einer Schwinge 17 gehalten ist. Diese Schwinge 17 sitzt unverdrehbar auf der Zahnbürstenachse 4 und hat im Bereich der Aufnahme 16 seitlichen Abstand von ihr. Durch die kreisförmige Bewegung des Exzenterzapfens 14 und damit auch des Gleitsteines 15 bewegt sich die Schwinge 17 auf und ab und kippt dabei gleichzeitig um die Zahnbürstenachse 4, auf der sie befestigt ist. Der genauere Bewegungsablauf wird anhand der nachfolgenden Figuren deutlicher.

Die Figur 2 läßt desweiteren erkennen, daß der Zahnbürstenkopf 3 mit einem Kugelkopf 18 in eine Kugelpfanne 19 des Griffteiles 2 eingreift. Durch diese Gestaltung kann der Zahnbürstenkopf 3 um die Längsachse der Zahnbürste gedreht werden. Zusätzlich ist er quer zur Zeichnungsebene kippbar. Wichtig für diese Kippbewegung ist es, daß die Mittellinie der Achse 10 die Mittellinie der Motorwelle 12 schneidet und dieser in der Zeichnung mit 21 positionierte Schnittpunkt zugleich das Zentrum des Kugelkopfes 18 und der Kugelpfanne 19 bildet.

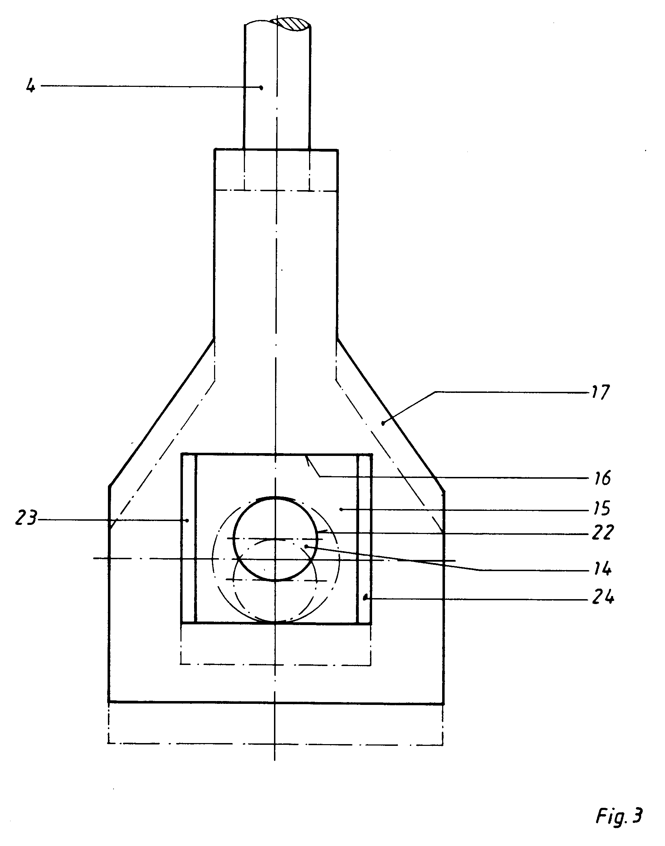

Die Figur 3 verdeutlicht, daß die Aufnahme 16 der auf der Zahnbürstenachse 4 drehfest gehaltenen Schwinge 17 im Querschnitt rechteckig und der Gleitstein 15 entsprechend ebenfalls rechteckig ist. Dieser Gleitstein 15 hat eine Bohrung 22, in die der Exzenterzapfen 14 greift. Dreht sich der Exzenterzapfen 14 um 180 Grad und gelangt dadurch in seine strichpunktiert dargestellte untere Stellung, so wird die Schwinge 17 entsprechend nach unten bewegt, so daß auch die Zahnbürstenachse 4 axial verschoben wird. Da der Exzenterzapfen 14 sich in seinen nicht gezeigten Zwischenstellungen seitlich der Zahnbürstenachse 4 befindet, müßte eigentlich die Schwinge 17 auch seitlich verschoben werden, was jedoch nicht möglich ist, weil die Zahnbürstenachse 4 seitlich fixiert ist. Statt einer Seitwärtsbewegung führt die Schwinge 17 eine Kippbewegung aus, die dadurch möglich wird, daß der Gleitstein 15 an zwei Seitenflächen 23, 24 bogenförmig gekrümmt ausgebildet ist und die Zahnbürstenachse 4 in Figur 3 gesehen unterhalb des Gleitsteines 15 verläuft. Dadurch entsteht ein Kippmoment, wenn der Gleitstein 15 in seiner Aufnahme 16 die Schwinge 17 zur Seite hin drückt, so daß diese um die Zahnbürstenachse 4 kippt und dabei die Zahnbürstenachse 4 entsprechend verdreht.

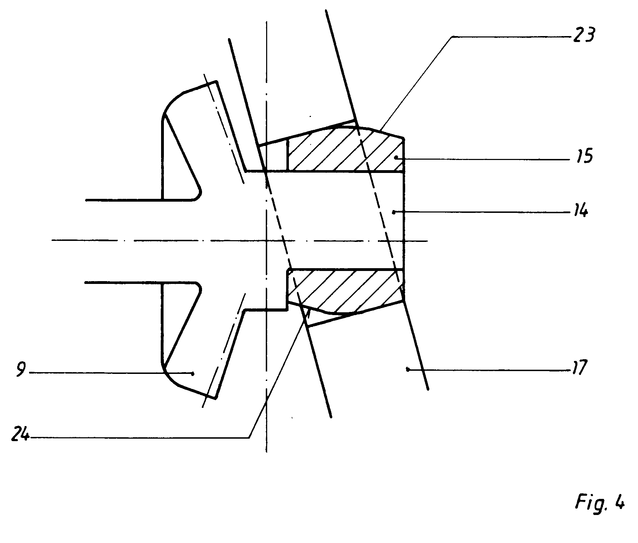

Die Figur 4 verdeutlicht, daß die Seitenflächen 23, 24 des Gleitsteines 15 bogenförmig gekrümmt ausgebildet sind. Dadurch kann die Schwinge 17 in der dargestellten, gegenüber Figur 3 um 90 Grad verdrehten Stellung des Exzenterzapfens 14 die gekippte Stellung einnehmen, so daß sie sich nicht zur Seite bewegen muß.

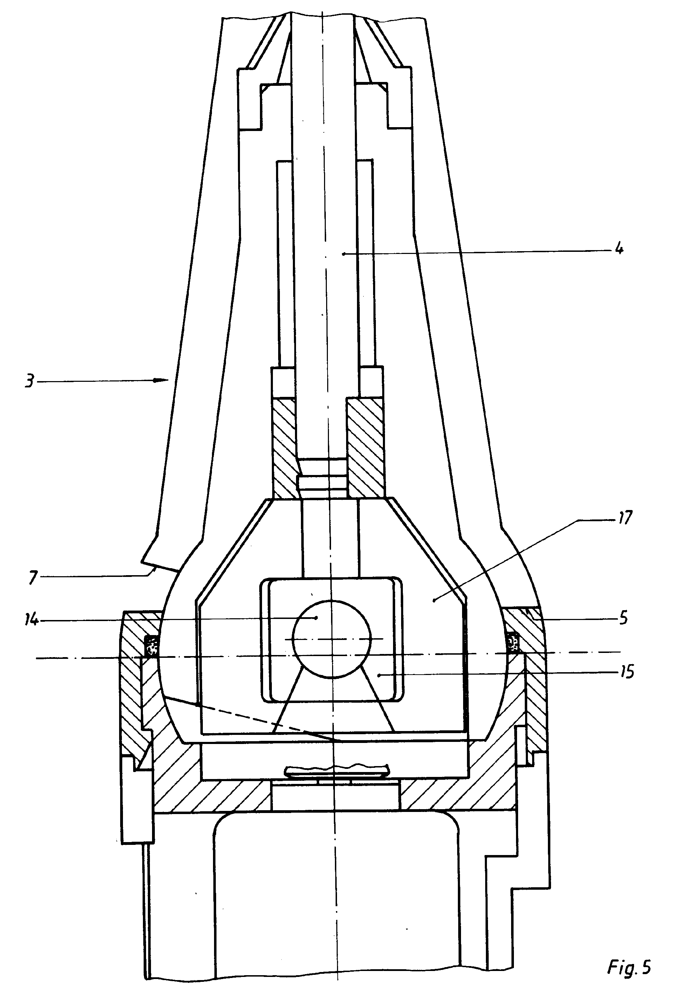

Die Figur 5 zeigt die bereits anhand der Figur 1 erwähnte Schrägfläche 7 und die Abstützfläche 5 des Zahnbürstenkopfes 3. Zu erkennen ist in Figur 5 weiterhin die auf der Zahnbürstenachse 4 sitzende Schwinge 17, welche durch den Gleitstein 15 auf und ab und zusätzlich pendelnd um ihre Längsachse hin und her bewegt wird. Zu sehen ist in Figur 5 auch der in den Gleitstein 15 greifende Exzenterzapfen 14, nicht jedoch das Zahnrad 9 mit seiner Achse 10, da diese Bauteile in Figur 5 gesehen hinter der Schwinge 17 liegen.

Auflistung der verwendeten Bezugszeichen

1 Gehäuse
2 Griffteil
3 Zahnbürstenkopf
4 Zahnbürstenachse
5 Abstützfläche
6 Schulterfläche
7 Schrägfläche
8 Getriebe
9 Zahnrad
10 Achse
11 Ritzel
12 Motorwelle
13 Motor
14 Exzenterzapfen
15 Gleitstein
16 Aufnahme
17 Schwinge
18 Kugelkopf
19 Kugelpfanne
20 Abstützstelle
21 Schnittpunkt
22 Bohrung
23 Seitenfläche
24 Seitenfläche

**Patentansprüche**

1. Elektrische Zahnbürste mit einer im Zahnbürstengehäuse (1) drehbar gelagerten Zahnbürstenachse (4), welche von einem Elektromotor (13) mit einer umlaufenden Motorwelle (12) in eine Pendelbewegung um ihre Längsachse und eine hin- und hergehende Bewegung in Richtung ihrer Längsachse bewegbar ist, wobei zur Erzeugung der Pendelbewegung eine Schwinge (17) fest mit der Zahnbürstenachse (4) verbundenen ist, in die ein Exzenterzapfen (14) eingreift, dadurch gekennzeichnet, daß die Schwinge (17) achsparallel zur Zahnbürstenachse (4) und der Exzenterzapfen (14) senkrecht zur Zahnbürstenachse (4) ausgerichtet ist und in eine quer zur Zahnbürstenachse (4) gerichtete Aufnahme (16) der Schwinge (17) greift.

2. Elektrische Zahnbürste nach Anspruch 1, dadurch gekennzeichnet, daß auf dem Exzenterzapfen (14) verdrehbar ein Gleitstein (15) angeordnet ist, welcher in die Aufnahme (16) eingreift und daß die beiden achsparallel zur Zahnbürstenachse (4) verlaufenden Seitenflächen (23, 24) des Gleitsteines (15) und/oder die entsprechenden Seitenflächen der Aufnahme (16) zur Ermöglichung einer Kippbewegung der Schwinge (17) gekrümmt oder abgeschrägt verlaufen.

3. Elektrische Zahnbürste nach den Ansprüchen 1 oder 2, dadurch gekennzeichnet, daß der Exzenterzapfen (14) an der Stirnseite eines um eine quer zur Zahnbürstenachse (4) drehbar im Gehäuse (1) der Zahnbürste gelagerten Zahnrades (9) vorgesehen ist, in welches ein auf der Motorwelle (12) sitzendes Ritzel (11) eingreift.

4. Elektrische Zahnbürste nach zumindest einem der Ansprüche 1 bis 3, dadurch gekennzeichnet, daß der

EP 0 327 876 B1

die Aufnahme (16) für den Gleitstein (15) aufweisende Teil der Schwinge (17) radialen Abstand von der Zahnbürstenachse (4) hat.

5. Elektrische Zahnbürste nach zumindest einem der vorangehenden Ansprüche, dadurch gekennzeichnet, daß der Exzenterzapfen (14) von der Seite der Zahnbürstenachse (4) her in den Gleitstein (15) greift.

6. Elektrische Zahnbürste nach zumindest einem der vorangehenden Ansprüche, dadurch gekennzeichnet, daß das Zahnrad (9) in einem die Zahnbürstenachse (4) lagernden Zahnbürstenkopf (3) angeordnet ist, welcher mit einem Kugelkopf (18) verdrehbar und schwenkbar in einer Kugelpfanne (19) eines den Motor (13) aufnehmenden Griffteiles (2) des Gehäuses (1) der Zahnbürste sitzt, wobei das Zentrum (21) des Kugelkopfes (18) im Schnittpunkt der Achse (10) des Zahnrades (9) und der Achse der Motorwelle (12) liegt.

7. Elektrische Zahnbürste nach zumindest einem der vorangehenden Ansprüche, dadurch gekennzeichnet, daß der Zahnbürstenkopf (3) an jeder Seite der das Zahnrad (9) lagernden Achse (10) eine Abstützstelle hat, welche gegen eine stirnseitige Schulter (6) des Griffteiles (2) anliegt.

8. Elektrische Zahnbürste nach zumindest einem der vorangehenden Ansprüche, dadurch gekennzeichnet, daß der Zahnbürstenkopf (3) mit einer über 180 Grad geführten Abstützfläche (5) gegen die stirnseitige Schulterfläche (6) des Griffteiles (2) anliegt und seine Verschwenkbarkeit durch eine sich dieser Abstützfläche (5) anschließenden Schrägfläche (7) begrenzt ist.

9. Elektrische Zahnbürste nach zumindest einem der vorangehenden Ansprüche, dadurch gekennzeichnet, daß die Achse (10) des Zahnrades (9) an zumindest einer Seite aus dem Kugelkopf (18) herausragt und in eine bogenförmige Nut des Griffteiles (2) greift.


## Claims

1. Electric toothbrush with a toothbrush spindle (4) which is rotatably mounted in the toothbrush housing (1) and can be moved with an oscillating movement round its longitudinal axis and a reciprocating movement in the direction of its longitudinal axis by an electric motor (17) with a rotating motor shaft (12), a rocker (17) being rigidly connected to the toothbrush spindle (4) to produce the oscillating movement, an eccentric peg (14) engaging in the toothbrush spindle (4), characterised in that the rocker (17) is orientated parallel to the axis of the toothbrush spindle (4) and the eccentric peg (14) is orientated perpendicularly to the toothbrush spindle (4) and engages in a receiver (16) in the rocker (17) directed transversely to the toothbrush spindle (4).

2. Electric toothbrush according to claim 1, characterised in that a sliding block (15) engaging in the receiver (16) is arranged rotatably on the eccentric peg (14) and in that the two lateral faces (23, 24) of the sliding block (15) extending parallel to the axis of the toothbrush spindle (4) and/or the corresponding lateral faces of the receiver (16) extend in a bent or bevelled manner to allow a tilting movement of the rocker (17).

3. Electric toothbrush according to claims 1 or 2, characterised in that the eccentric peg (14) is provided on the end face of a gear-wheel (9) which is mounted transversely to the toothbrush spindle (4) rotatably in the housing (1) of the toothbrush and into which a pinion (11) resting on the motor shaft (12) engages.

4. Electric toothbrush according to at least one of claims 1 to 3, characterised in that the part of the rocker (17) having the receiver (16) for the sliding block (15) is radially spaced from the toothbrush spindle (4).

5. Electric toothbrush according to at least one of the preceding claims, characterised in that the eccentric peg (14) engages in the sliding block (15) from the side of the toothbrush spindle (4).

6. Electric toothbrush according to at least one of the preceding claims, characterised in that the gear-wheel (9) is arranged in a toothbrush head (3) which supports the toothbrush spindle (4), rests with a ball head (18) rotatably and pivotally in a ball socket (19) of a handle part (2) of the housing (1) of the toothbrush receiving the motor (13), the centre (21) of the ball head (18) lying at the point of intersection of the spindle (10) of the gear-wheel (9) and the axis of the motor shaft (12).

7. Electric toothbrush according to at least one of the preceding claims, characterised in that the toothbrush head (3) has a support point on each side of the spindle (10) supporting the gear-wheel (9), the support point resting against a shoulder (6) on the end face of the handle part (2).

8. Electric toothbrush according to at least one the preceding claims, characterised in that the toothbrush head (3) rests with a supporting face (5) guided over 180° against the end shoulder face (6) of the handle part (2) and its pivotability is limited by an oblique face (7) adjoining this supporting face (5).

9. Electric toothbrush according to at least one of the preceding claims, characterised in that the spindle (10) of the gear-wheel (9) projects from the ball head (18) on at least one side and engages in an arc-shaped groove in the handle part (2).

5

## Revendications

1. Brosse à dents électrique avec un axe de brosse à dents (4) monté de manière à pouvoir tourner dans le boîtier de la brosse à dents (1), qui est déplaçable au moyen d'un moteur électrique (13) ayant un arbre de moteur tournant (12) avec obtention d'un mouvement pendulaire autour de son axe longitudinal et d'un mouvement de va-et-vient en direction de son axe longitudinal, une pièce oscillante (17) dans laquelle s'engage un tourillon excentrique (14) étant assemblée fixement à l'axe de brosse à dents (4) pour l'obtention du mouvement pendulaire caractérisée en ce que la pièce oscillante (17) est disposée parallèlement à l'axe de brosse à dents (4) et le tourillon excentrique (14) est disposé perpendiculairement à l'axe de brosse à dents et s'engage dans un logement (16) de la pièce oscillante (17) dirigé transversalement à l'axe de brosse à dents (4).

2. Brosse à dents électrique selon la revendication 1 caractérisée en ce qu'un coulisseau (15) est monté mobile autour du tourillon excentrique (14), lequel s'engage dans le logement (16) et les deux surfaces latérales (23, 24) du coulisseau (15) disposées parallèlement à l'axe de brosse à dents (4) et/ou les surfaces latérales correspondantes du logement (16) sont agencées avec une courbure ou chanfreinées.

3. Brosse à dents électrique selon la revendication 1 ou 2 caractérisée en ce que le tourillon excentrique (14) est prévu sur le côté frontal d'une roue dentée (9) montée de manière à pouvoir tourner autour d'un axe transversal à l'axe de brosse à dents (4) dans le carter (1) de la brosse à dents, un pignon (11) calé sur l'arbre de moteur (12) engrenant avec la roue dentée (9).

4. Brosse à dents électrique selon l'une au moins des revendications 1 à 3 caractérisée en ce que la partie de la pièce oscillante (17) comportant le logement (16) pour le coulisseau (15) présente une distance radiale par rapport à l'axe de brosse à dents (4).

5. Brosse à dents électrique selon l'une au moins des revendications précédentes caractérisée en ce que le tourillon excentrique (14) s'engage à partir du côté de l'axe de brosse à dents (4) dans le coulisseau (15).

6. Brosse à dents électrique selon l'une au moins des revendications précédentes caractérisée en ce que la roue dentée (9) est disposée dans une tête de brosse à dents (3) logeant l'axe de brosse à dents (4), cette tête de brosse à dents (3) étant montée de manière à pouvoir tourner et pivoter avec une tête sphérique (18) dans une cuvette sphérique (19) d'une partie de manche (2) du carter (1) de brosse à dents logeant le moteur (13), le centre (21) de la tête sphérique (18) étant situé au point d'intersection de l'axe (10) de la roue dentée (9) et de l'axe de l'arbre de moteur (12).

7. Brosse à dents électrique selon l'une au moins des revendications précédentes caractérisée en ce que la tête de brosse à dents (3) comporte de chaque côté de l'axe (10) sur lequel est monté la roue dentée (9) un emplacement de support qui prend appui sur un épaulement (6) du côté frontal de la partie de manche (2).

8. Brosse à dents électrique selon l'une au moins des revendications précédentes caractérisée en ce que la tête de brosse à dents (3) prend appui par une surface de support (5) portant sur 180 degrés de la surface d'épaulement frontale (6) de la partie de manche (2) et son aptitude au pivotement est limitée par une surface oblique (7) faisant suite à cette surface de support (5).

9. Brosse à dents électrique selon l'une au moins des revendications précédentes caractérisée en ce que l'axe (10) de la roue dentée (9) fait saillie sur au moins un côté hors de la tête sphérique (18) et s'engage dans une rainure en arc de la partie de manche (2).

Fig. 1

Fig. 2

Fig. 3

*Fig.* 4

*Fig. 5*